# FASCICULE DE BREVET EUROPEEN

(11) **EP 4 544 166 B1**
(45) Date de publication et mention de la délivrance du brevet: **04.03.2026**
(21) Numéro de dépôt: 23744211.6
(22) Date de dépôt: 20.06.2023
(51) Int. Cl.: F02K 1/62, F02K 1/72, F02K 1/82

(54) **VOLET DE BLOCAGE D'UN INVERSEUR DE POUSSÉE D'AÉRONEF**
BLOCKERTÜR FÜR EINE SCHUBUMKEHRVORRICHTUNG EINES FLUGZEUGS
BLOCKER DOOR FOR AN AIRCRAFT THRUST REVERSER

(30) Priorité: 22.06.2022 FR 2206132
(43) Date de publication de la demande: 30.04.2025
(73) Titulaire: Safran Nacelles, 76700 Gonfreville-l'Orcher (FR)
(72) Inventeur: VALLEROY, Laurent Georges, 77550 MOISSY-CRAMAYEL (FR); DESJOYEAUX, Bertrand Léon Marie, 77550 MOISSY-CRAMAYEL (FR); BELLET, François, 77550 MOISSY-CRAMAYEL (FR); MESMIN, Mattias, 77550 MOISSY-CRAMAYEL (FR); PREAU, Mathieu François Eric, 77550 MOISSY-CRAMAYEL (FR)
(74) Mandataire: Santarelli
(86) Numéro de dépôt international: PCT/FR2023/050925
(87) Numéro de publication internationale: WO 2023/247893

(56) Documents cités:
- EP-A1- 3 361 082
- WO-A1-2018/087502
- FR-A1- 3 081 510

## Description

### DOMAINE TECHNIQUE

La présente demande concerne les inverseurs de poussée pour nacelle de moteur d'aéronef. L'invention porte plus précisément sur un volet de blocage particulièrement adapté aux inverseurs de poussée du type à grilles et capotage coulissant. L'invention peut toutefois aussi s'appliquer à d'autres types d'inverseurs de poussée.

### ART ANTERIEUR

Une nacelle de turboréacteur (ou autre moteur) d'aéronef présente généralement une structure tubulaire comprenant une entrée d'air en amont du turboréacteur, une section médiane entourant la soufflante du turboréacteur, une section aval entourant la chambre de combustion du turboréacteur et intégrant généralement un inverseur de poussée, et une tuyère d'éjection dont la sortie est située en aval du turboréacteur.

Dans le cas d'un turboréacteur à double flux, la nacelle comprend usuellement une structure externe comprenant l'entrée d'air, la section médiane, la section aval et la tuyère d'éjection, et une structure interne fixe, concentrique de la section aval et qui entoure le cœur du turboréacteur en arrière de la soufflante. Un turboréacteur à double flux engendre d'une part un flux primaire chaud qui traverse la chambre de combustion du turboréacteur, et d'autre part un flux secondaire froid qui est issu de la soufflante et circule à l'extérieur du cœur du turboréacteur, dans un canal annulaire appelé veine secondaire, formé entre les structures externe et interne de la nacelle. En jet direct, ces deux flux d'air s'écoulent globalement selon une direction longitudinale de la nacelle vers la tuyère d'éjection de celle-ci.

De la même façon, dans un turboréacteur simple flux, en jet direct, le flux d'air s'écoule globalement selon une direction longitudinale de la nacelle vers la tuyère d'éjection de celle-ci.

Dans toute la description, l'amont et l'aval, de même que l'avant et l'arrière, de la nacelle ou d'une partie de la nacelle sont définis par référence au sens d'écoulement du flux d'air dans la nacelle en fonctionnement en jet direct, l'amont de la nacelle ou d'une partie de celle-ci correspondant à une zone par laquelle le flux pénètre (en jet direct) et l'aval correspondant à une zone d'échappement dudit flux d'air.

Le rôle d'un inverseur de poussée est, lors de l'atterrissage d'un avion, d'améliorer la capacité de freinage de celui-ci en redirigeant vers l'avant au moins une partie de la poussée générée par le moteur. Dans cette phase, l'inverseur obstrue une veine d'un flux d'air qui traverse la nacelle, par exemple la veine secondaire dans laquelle circule le flux secondaire froid (dans un turboréacteur à double flux) et/ou une partie de la sortie du flux primaire chaud, et redirige le flux en question vers l'avant de la nacelle, générant de ce fait une contre-poussée qui vient s'ajouter au freinage des roues de l'avion.

Les moyens mis en œuvre pour obturer (au moins partiellement) la veine secondaire, ou une autre veine traversée par un flux d'air, et réorienter ledit flux d'air vers l'avant de la nacelle varient suivant le type d'inverseur. On connaît notamment les inverseurs à grilles et capotage coulissant et les inverseurs à portes. L'invention s'applique plus particulièrement aux inverseurs à grilles et capotage coulissant. Dans un inverseur à grilles, la réorientation du flux d'air vers l'avant est effectuée par une ou plusieurs grilles de déviation, aussi appelées cascades, qui encerclent une section aval du flux d'air. L'inverseur peut comprendre une unique grille de déviation en forme de virole ou (plus généralement) plusieurs grilles de déviation correspondant chacune à un secteur angulaire de la nacelle.

L'inverseur comporte également un capotage coulissant comprenant un ou plusieurs ensembles de capots coulissants. A l'instar des grilles de déviation, l'inverseur peut comprendre un unique ensemble de capots en forme de virole, connu sous le terme anglais O-duct, ou deux ensembles de capots semi-circulaires, connus sous le terme anglais C-duct ou D-duct, ou encore un nombre plus grand d'ensembles de capots correspondant chacun à un secteur angulaire de la nacelle.

Chaque ensemble de capots est monté coulissant selon une direction longitudinale parallèle à l'axe central de la nacelle, entre :
- une position avant fermée de fonctionnement en jet direct, dans laquelle les capots assurent la continuité aérodynamique de la nacelle et recouvrent les grilles de déviation de sorte que le flux d'air est éjecté vers l'arrière, et
- une position arrière ouverte de fonctionnement en jet inverse dans laquelle les grilles de déviation sont découvertes et au moins une partie du flux d'air est réorientée vers l'avant de la nacelle à travers lesdites grilles de déviation.

Dans un inverseur à grilles et capotage coulissant, le ou les ensembles de capots coulissants visent donc uniquement à recouvrir et découvrir la ou les grilles de déviation (qui sont généralement fixes).

Par ailleurs, l'obturation de la veine est réalisée par des volets de blocage, généralement activés par le coulissement du capotage, et qui permettent une fermeture (au moins partielle) de la veine en aval des grilles de déviation de manière à optimiser la réorientation du flux.

Chaque volet de blocage est monté pivotant sur le capotage coulissant et est actionné par une bielle qui est articulée d'une part au volet de blocage et d'autre part à un élément fixe de la nacelle, généralement à un élément de la structure interne fixe de la nacelle.

Lorsque le capotage est en position avant fermée de fonctionnement en jet direct, le volet de blocage est dans une position rabattue dans laquelle il s'insère dans une cavité du capotage et présente une face côté veine qui s'étend dans le prolongement aérodynamique de la face interne du capotage.

Lorsque le capotage est en position aval ouverte de fonctionnement en jet inverse, le volet de blocage est dans une position déployée dans laquelle il obture au moins partiellement la veine afin de forcer le flux d'air à sortir de la veine par les grilles de déviation.

Dans toute la description, la face d'un volet de blocage qui s'étend dans la veine (et est léchée par le flux d'air lorsque le volet est en position de jet direct) est dite face côté veine, et la face du volet de blocage qui est opposée à la face côté veine est dite face arrière.

Une nacelle doit remplir plusieurs fonctions fondamentales, parmi lesquelles la protection du moteur, l'optimisation des flux d'air de l'ensemble propulsif, la gestion des écarts de températures internes/externes, une reprise des efforts entre le moteur et le mât de moteur, ainsi que l'atténuation des bruits du moteur.

Pour remplir cette dernière fonction, certains éléments de la nacelle sont traités de façon acoustique afin de pouvoir absorber les ondes sonores émises par le moteur. C'est le cas des volets de blocage et d'au moins une partie du capotage de l'inverseur de poussée.

Concernant les volets de blocage, il est connu de prévoir des volets de blocage en panneaux acoustiques ayant une structure sandwich comprenant une âme centrale alvéolaire, généralement constituée d'un nid d'abeille, et deux peaux qui couvrent les deux faces frontales opposées de l'âme centrale, lesquelles peaux sont usuellement en tissu de carbone imprégné de résine époxy durcie. La peau située du côté de la veine, qualifiée de peau résistive ou de peau acoustique, est acoustiquement poreuse : elle est pourvue d'un réseau de perforations qui mettent en communication la veine avec les alvéoles de l'âme centrale pour absorber une partie des bruits produits par le moteur. La peau opposée, dite peau arrière est généralement pleine. L'âme centrale et la peau arrière assurent la tenue mécanique du volet, tandis que la peau résistive (peau veine) peut ne remplir essentiellement qu'une fonction acoustique.

Pour alléger le poids des volets de blocage, FR3089567 propose de supprimer la peau arrière pleine desdits volets. La tenue mécanique du volet est alors essentiellement assurée par la peau veine et la structure alvéolaire.

Par ailleurs, afin de simplifier la fabrication de tels volets de blocage et d'augmenter le taux de surface ouverte de la peau résistive (c'est-à-dire le pourcentage de la surface de la peau veine qui correspond aux perforations), FR3058672 propose de réaliser ensemble l'âme alvéolaire et la peau résistive par moulage d'un polymère thermoplastique. En d'autres termes, FR3058672 divulgue un volet de blocage essentiellement constitué d'un panneau monobloc qui remplit à la fois les fonctions aéro-acoustique et structurale (tenue mécanique).

Les inconvénients d'un tel panneau monobloc sont sa faible tolérance aux dommages, en particulier aux chocs, ainsi qu'un compromis masse/tenue mécanique et un compromis masse/coûts qui ne sont pas optimisés.

EP 3 128 163 propose un volet dans lequel tous les composants du sandwich sont assemblés autour d'un cadre structural. Le cadre structural comprend des nervures s'étendant longitudinalement et transversalement et intègre les ferrures nécessaires à l'articulation et à la commande du volet, ainsi que des pattes de fixation. La peau veine est en composite renforcé de fibres (elle est donc structurale). Elle est plaquée contre le cadre structural et est fixé à celui-ci par des rivets au niveau des pattes de fixation. Un cœur alvéolaire est logé entre les nervures du cadre structural. La peau arrière (optionnelle) est solidaire du cœur alvéolaire, par exemple parce qu'elle est obtenue par moulage simultané avec ledit cœur ou parce qu'elle est collée à celui-ci par une résine époxy. L'ensemble cœur alvéolaire/peau arrière est fixé au cadre structural par des rivets.

Le volet de blocage divulgué par EP 3 128 163 présente divers inconvénients :
- l'ensemble des éléments structuraux du panneau, en particulier le cadre structural, est soumis à l'impact ;
- les zones de fixations sont aussi soumises à l'impact ;
- les performances aérodynamiques sont dégradées par la présence des fixations dans la veine qui génèrent de la trainée ;
- le procédé de fabrication, qui comporte l'assemblage de nombreuses pièces, est particulièrement coûteux. Enfin, FR 3 081 510 divulgue un volet d'inverseur de poussée constitué d'un panneau acoustique formé par l'assemblage d'une structure avant et d'une structure arrière. La structure avant comporte une peau avant acoustique et un premier réseau de parois alvéolaires, tandis que la structure arrière comporte une peau arrière et un second réseau de parois alvéolaires, les premier et second réseaux de parois alvéolaires étant complémentaires de sorte à former, en position assemblée, une âme centrale alvéolaire. Le premier réseau de parois alvéolaires de la structure avant est emboité dans le second réseau de parois alvéolaires de la structure arrière au moyen d'encoches prévues dans les parois alvéolaires des deux réseaux, les encoches du premier réseau étant agencées en regard des encoches du second réseau afin de s'insérer les unes dans les autres. La structure avant et la structure arrière sont assemblées de façon à ce que le réseau de parois alvéolaires de l'une des structures soit espacé de la peau de l'autre structure d'un jeu d, lequel jeu a pour vocation de garantir le bon montage de la pièce et d'éviter les vibrations et/ou déformations durant son utilisation. Ce jeu est limité, par exemple inférieur à 2mm, pour ne pas dégrader les performances acoustiques des alvéoles comme résonateurs. A noter que la peau arrière (d'où part le second réseau de parois alvéolaire) s'étend nécessairement sur toute la surface du panneau afin que l'âme alvéolaire couvre elle-aussi toute la surface du panneau acoustique.

Qu'ils se caractérisent par leur nature monobloc ou qu'ils présentent une structure sandwich, les volets de blocage antérieurs précédemment décrits présentent tous une sensibilité à l'impact de leurs zones structurales. Par ailleurs, les surfaces pouvant être traitées acoustiquement sont limitées. De plus, les coûts de production sont élevés, de même que la masse des volets.

### EXPOSE DE L'INVENTION

L'invention vise à résoudre au moins l'un des problèmes susmentionnés. En particulier, un objectif de l'invention est d'améliorer le comportement à l'impact des volets de blocage, tout en proposant des volets légers, économiques à produire et offrant d'excellentes performances acoustiques.

Pour ce faire, l'invention propose un volet de blocage pour inverseur de poussée, de préférence du type à grilles et capotage coulissant, le volet de blocage comprenant :
- un cadre structural configuré pour assurer, de préférence à lui seul, la tenue mécanique du volet de blocage,
- une âme alvéolaire,
- une peau résistive acoustiquement poreuse, destinée à être située du côté d'une veine traversée par un flux d'air. Dans toute la suite, cette peau est indifféremment appelée peau veine ou peau côté veine ou peau résistive.

Le volet de blocage selon l'invention est caractérisé en ce que le cadre structural couvre moins de 50% de la surface de la peau résistive et en ce que ledit cadre structural est maintenu à distance de la peau résistive, ladite distance étant ci-après appelée distance de découplage.

L'invention repose donc sur un découplage entre d'une part la structure qui assure la tenue mécanique du volet (le cadre structural) et d'autre part la peau résistive, qui est léchée par le flux traversant la veine et est de ce fait exposée à d'éventuels objets susceptibles d'endommager le volet de blocage.

Ainsi, la peau résistive peut absorber les impacts causés par des objets venant percuter le volet dans la veine. Dès lors que l'impact sur la peau résistive présente une profondeur inférieure à la distance de découplage, les risques que le cadre structural soit touché, et donc fragilisé, sont extrêmement réduits. En fonctionnement en jet direct, le volet peut éventuellement présenter des performances aérodynamiques dégradées du fait de la présence de l'impact mais il continue à tenir ; en jet inverse, le volet peut continuer à fonctionner en toute sécurité. Si l'influence de l'impact sur la trainée est acceptable, il n'est donc pas nécessaire de prévoir une opération de maintenance pour réparer ou remplacer le volet de blocage endommagé. En outre, on peut facilement visualiser l'endommagement.

Selon une caractéristique possible de l'invention, la distance de découplage est supérieure ou égale à 1 mm, de préférence supérieure ou égale à 2 mm, ou encore supérieure ou égale à 5 mm, tandis que le jeu d décrit dans FR 3 081 510, dont la fonction n'est aucunement de protéger la structure arrière des chocs subis par la structure avant, est quant à lui inférieur à 2mm, voire inférieur à 1,5mm.

En outre, contrairement à la peau arrière de la structure arrière du volet divulgué par FR 3 081 510, le cadre structural selon l'invention ne s'étend pas sur toute la surface du volet, ledit cadre ne participant pas à la fonction acoustique du panneau. Les dimensions restreintes du cadre structural rendent le volet de blocage plus léger, ce qui est important dans le domaine aéronautique.

Selon une caractéristique possible de l'invention, la peau résistive est plaquée contre l'âme alvéolaire et est fixée à celle-ci, la peau résistive et l'âme alvéolaire formant un sous-ensemble monobloc, ci-après dit caisson aéro-acoustique.

A cette fin, divers procédés de fabrication peuvent être envisagés. Le caisson aéro-acoustique peut par exemple être obtenu par moulage ou par fabrication additive, la peau résistive et l'âme alvéolaire étant alors fabriquées en même temps. En variante, la peau résistive et l'âme alvéolaire peuvent être fabriquées séparément puis collées l'une à l'autre par tout moyen approprié (utilisation d'une résine epoxy ou de tout autre matériau adhésif adapté), étant de préférence exclus les moyens de fixation mécaniques qui traversent la peau résistive (rivets par exemple) car ils sont susceptibles de générer de la traînée dans la veine et ils réduisent la surface perméable acoustique.

De préférence, l'âme alvéolaire comporte des cloisons qui s'étendent en saillie de la peau résistive selon une direction, dite direction radiale, correspondant à la direction de l'épaisseur du volet de blocage.

Selon une caractéristique possible de l'invention, le cadre structural comprend une portion de corps s'étendant parallèlement à la peau résistive, et des ailettes radiales s'étendant en saillie de cette portion de corps selon la direction radiale. Lesdites ailettes radiales présentent chacune un bord libre qui s'étend de préférence sensiblement parallèlement à la peau résistive.

Selon une caractéristique possible de l'invention, les cloisons de l'âme alvéolaire présentent des encoches de réception des ailettes du cadre structural, lesquelles encoches présentent un fond situé à une distance de la peau résistive qui, en tout point de l'encoche, est supérieure ou égale à la distance de découplage, le cadre structural venant ainsi s'emboîter dans l'âme alvéolaire. La distance minimale entre le bord libre des ailettes du cadre structural et la peau résistive correspond donc à la distance de découplage lorsque lesdites ailettes sont totalement enfoncées dans lesdites encoches.

Ainsi emboîtés l'un dans l'autre, le cadre structural et le caisson aéro-acoustique sont rendus solidaires par tout moyen approprié. Il est possible de prévoir des fixations mécaniques ponctuelles rigides, tels des attaches (par exemple des agrafes ou des ferrures) reliant chacune une ailette du cadre structural à une cloison du caisson aéro-acoustique. Il n'est pas totalement exclu d'utiliser, en variante, des rivets reliant la peau résistive ou l'âme acoustique au cadre structural.

On préfèrera toutefois tout moyen de fixation qui n'impacte pas la face côté veine de la peau résistive et ne génère donc aucune traînée dans la veine. Ainsi par exemple, des points de colle peuvent être prévus au fond de certaines encoches des cloisons de l'âme alvéolaire. En variante, des pattes déformables ou des pinces à ressort (clips) recevant des extensions du cadre structural peuvent être formées dans le caisson aéro-acoustique (ou inversement) pour permettre de clipser le cadre sur le caisson aéro-acoustique. D'autres solutions sont possibles pour fixer le cadre structural au caisson aéro-acoustique.

Selon une caractéristique possible de l'invention, le cadre structural comprend de plus :
- deux chapes s'étendant en saillie selon la direction radiale de la portion de corps du cadre structural, lesdites chapes recevant deux pivots réalisant une liaison pivot entre le volet de blocage et le capotage de l'inverseur de poussée,
- un logement ménagé dans la portion de corps du cadre structural du côté opposé à la peau résistive, ledit logement recevant une attache de bielle ; de préférence, il s'agit d'une attache de bielle à ressort à lame,
- une lumière dans ledit logement pour le passage d'une bielle de commande du volet de blocage.

Par ailleurs, selon une caractéristique possible de l'invention, le cadre structural et/ou l'âme alvéolaire du volet de blocage comprend, du côté opposé à la peau résistive, une butée de volet en jet direct, destinée à venir en butée contre le capotage coulissant lorsque le volet est rabattu en une position de jet direct.

A noter qu'il peut y avoir plusieurs (par exemple deux) butées de volet en position de jet direct, par lesquelles le cadre structural et/ou l'âme alvéolaire du volet viennent en appui contre le capotage coulissant lorsque le volet est en position rabattue de jet direct. De façon général, dans toute la description, sauf indication contraire, l'article indéfini « un » (ou « une ») ne signifie pas « un et un seul » mais « au moins un », c'est-à-dire « un ou plusieurs ».

En variante, une ou plusieurs butées de volet en position de jet direct sont fixées sur le capotage coulissant. C

Selon une caractéristique possible de l'invention, le cadre structural présente une première partie globalement trapézoïdale comprenant :
- une plaque aval, dans laquelle sont ménagés le logement de réception de l'attache de bielle et la lumière de passage de la bielle précédemment définis,
- deux nervures longitudinales, ayant chacune une extrémité aval reliée à ladite plaque aval, et une extrémité amont située à proximité d'un bord amont du volet de blocage, les deux chapes précédemment définies étant formées aux extrémités amont desdites nervures longitudinales.

Selon une caractéristique possible de l'invention, le cadre structural présente de plus une nervure transversale amont, qui longe le bord amont du volet de blocage et relie les deux chapes ou les deux nervures longitudinales.

Selon une caractéristique possible de l'invention, le cadre structural présente de plus deux oreilles de part et d'autre de la plaque aval, lesdites oreilles présentant chacune une extrémité opposée à la plaque aval pourvue d'une butée de volet en jet direct telle que précédemment définie (en variante, les butées de volet sont fixées sur le capotage en regard des extrémités desdites oreilles).

Selon une caractéristique possible de l'invention, le volet de blocage selon l'invention est dépourvu de peau arrière, l'expression « peau arrière » désignant de façon usuelle une paroi qui s'étend sur toute la superficie du volet de blocage à l'arrière de l'âme alvéolaire (en d'autres termes, une paroi qui couvre toute la surface de la peau résistive).

En variante le volet de blocage comprend de plus une paroi qui s'étend dans un plan de la portion de corps du cadre structural, parallèlement à la peau résistive, ladite paroi couvrant au moins 90% de la surface des alvéoles de l'âme alvéolaire.

Cette paroi peut être une paroi pleine qui forme une peau arrière du volet de blocage en configuration SDOF (acronyme de l'anglais « *Single Degree of Freedom »).*

Il peut s'agir, en variante, d'une paroi micro-perforée qui forme un septum acoustique en configuration 2DOF (acronyme signifiant « deux *Degrees of Freedom »),* le volet de blocage comprenant alors une seconde âme alvéolaire formant un second étage d'atténuation acoustique, la paroi micro-perforée du cadre structural constituant une paroi intermédiaire interposée entre les deux âmes alvéolaires. En configuration 2DOF, le volet de blocage peut de surcroît comprendre une peau arrière, de préférence pleine, qui recouvre la seconde âme alvéolaire du côté extérieur du volet.

L'invention s'étend à un inverseur de poussée du type à grilles et capotage coulissant, caractérisé en ce qu'il comprend des volets de blocage tels que définis ci-avant. L'invention s'étend aussi à une nacelle comprenant un tel inverseur de poussée, et à un ensemble propulsif comprenant une telle nacelle.

De façon classique, le capotage coulissant comprend une virole amont contre laquelle les volets de blocage sont rabattus en position de jet direct, et cette virole amont comporte des cavités de réception des volets de blocage, chacun desdits volets de blocage venant se loger, en position de jet direct, dans l'une desdites cavités.

Selon une caractéristique possible additionnelle de l'invention, la virole amont comprend, côté veine :
- un caillebottis qui s'étend sur toute la circonférence de la virole, lequel caillebotis forme des alvéoles venant dans le prolongement radial des alvéoles de l'âme alvéolaire des volets de blocage en position de jet direct,
- des panneaux inter-volets, qui recouvrent le caillebotis côté veine entre les volets de blocage en position de jet direct et délimitent les cavités de réception des volets de blocage ; de préférence, ces panneaux inter-volets sont des panneaux acoustiques ayant une face côté veine acoustiquement poreuse qui s'étend dans le prolongement aérodynamique de la peau résistive des volets de blocage en position de jet direct.

Le caillebotis forme alors le fond de chacune des cavités de réception des volets de blocage.

**Il** est possible de prévoir des cloisons macro-perforées ou micro-perforées, dites septa, au niveau des cavités de réception des volets de blocage, entre les alvéoles du caillebotis et celles de l'âme alvéolaire des volets de blocage en position de jet direct, afin que les volets de blocage et la virole amont du capotage coulissant forment ensemble, lorsque les volets sont en position de jet direct, un complexe acoustique à deux étages permettant d'atténuer efficacement deux bandes de fréquences sonores différentes. Ces septa peuvent être fixés :
- soit sur les volets de blocage (chaque septum est alors formé par une peau arrière macro-perforée ou micro-perforée du volet de blocage recouvrant l'âme alvéolaire) auquel cas le caillebotis est ouvert côté veine (c'est-à-dire côté volet de blocage) au moins au niveau des cavités de réception des volets,
- soit sur le caillebotis (le caillebotis étant dans ce cas « fermé » côté veine par le septum).

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :

### BREVE DESCRIPTION DES DESSINS

[Fig. 1] est une section longitudinale (schématique) d'une moitié d'une portion aval d'une nacelle d'aéronef intégrant un inverseur de poussée selon l'invention, avec un volet de blocage en position de jet direct ;
[Fig. 2] représente la section longitudinale de la figure 1 avec le volet de blocage en position de jet inverse ;
[Fig. 3] est une vue schématique en perspective d'un premier mode de réalisation d'un volet de blocage selon l'invention, lequel volet est vu depuis sa face arrière ;
[Fig. 4] est une vue schématique en perspective du cadre structural du volet de blocage de la figure 3, vu depuis la face arrière du volet ;
[Fig. 5] est une vue schématique en perspective du cadre structural du volet de blocage de la figure 3, vu depuis la face côté veine du volet ;
[Fig. 6] est une vue schématique en perspective du caisson aéro-acoustique du volet de blocage de la figure 3, vu depuis la face côté veine du volet ;
[Fig. 7] est une vue schématique en perspective du caisson aéro-acoustique du volet de blocage de la figure 3, vu depuis la face arrière du volet ;
[Fig. 8] est une vue schématique en perspective d'un secteur angulaire d'un inverseur de poussée selon l'invention, avec des volets de blocage en position de jet inverse ;
[Fig.9] est un zoom sur l'interface entre le cadre structural et le caisson aéro-acoustique du volet de blocage des figures précédentes, cette interface étant vue en coupe selon un plan transversal et en perspective.
[Fig.10] est une vue en perspective écorchée d'un deuxième mode de réalisation d'un volet de blocage selon l'invention du type SDOF (acronyme de l'anglais « *Single Degree Of Freedom »)* et comportant une peau arrière ;
[Fig.11] est une section transversale du volet de la figure 10,
[Fig.12] est une section transversale d'un troisième mode de réalisation de l'invention, à savoir un volet de blocage du type 2DOF (signifiant deux « *Degree Of Freedom* ») et comportant une peau arrière.

Les éléments identiques représentés sur les figures précitées sont identifiés par des références numériques identiques.

### DESCRIPTION DETAILLEE

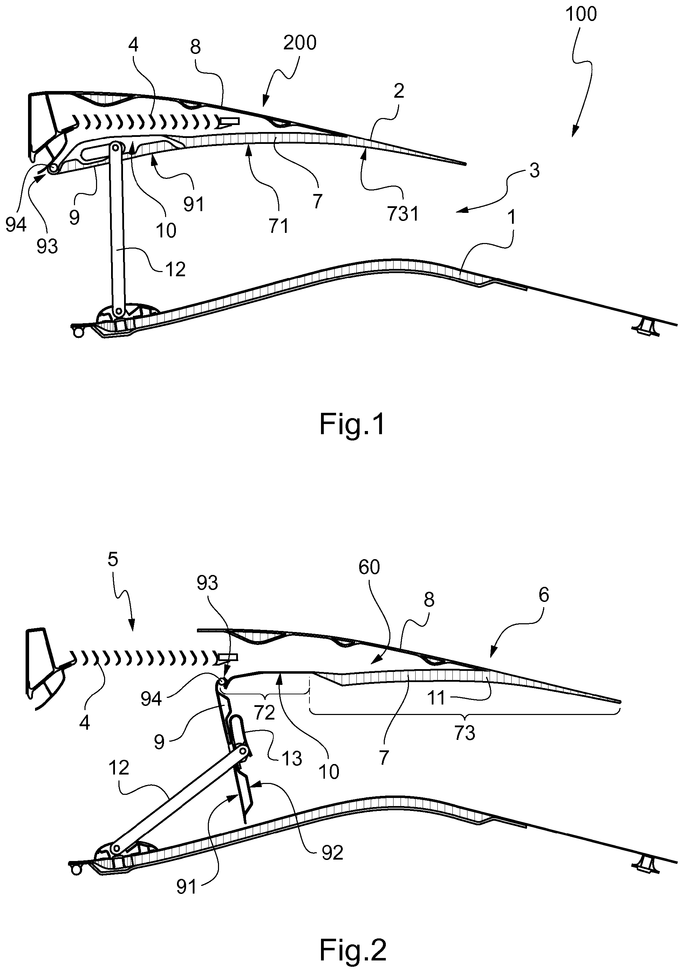

Les figures 1 et 2 représentent une section longitudinale d'une moitié d'une portion aval d'une nacelle d'aéronef 100, qui intègre un inverseur de poussée 200 du type à grilles et capotage coulissant, l'expression « section longitudinale » désignant une section par un plan, dit plan longitudinal, contenant l'axe central de la nacelle (qui est aussi l'axe de rotation du moteur -non représenté- qu'entoure la nacelle).

De façon usuelle, la nacelle 100 comprend une structure interne fixe 1 et une structure externe 2, qui forment entre elles une veine 3 traversée par un flux d'air s'écoulant globalement selon la direction longitudinale, de l'avant vers l'arrière de la nacelle.

La structure externe 2 de la nacelle intègre un inverseur de poussée 200 du type à grilles et capotage coulissant. L'inverseur de poussée comprend :
- une ou plusieurs grilles de déviation ou cascade 4, montée fixes en regard radialement d'une ouverture annulaire 5 (voir fig. 2), et
- un capotage 6 monté coulissant entre une position avant fermée de fonctionnement en jet direct illustrée à la figure 1, dans laquelle le capotage 6 obture l'ouverture annulaire 5, et une position arrière ouverte de fonctionnement en jet inverse illustrée à la figure 2, dans laquelle l'ouverture annulaire 5 est découverte, la veine 3 communiquant alors avec l'extérieur de la nacelle via les grilles de déviation 4.

A noter que la grilles de déviation peuvent, en variante, être solidaires du capot coulissant et de ce fait mobiles en translation longitudinale au sein de l'inverseur de poussée.

Le capotage 6 comprend un capot intérieur 7 et un capot extérieur 8, qui se rejoignent et sont fixés l'un à l'autre à une extrémité aval du capotage. A l'inverse, les capots intérieur et extérieur sont distants radialement l'un de l'autre à l'amont de cette extrémité aval de liaison, formant ainsi un logement tubulaire dans lequel les grilles de déviation 4 viennent s'insérer lorsque le capotage est en position avant fermée de fonctionnement en jet direct.

L'inverseur de poussée comprend de plus une pluralité de volets de blocage 9 répartis sur toute la circonférence du capotage 6. Chaque volet de blocage 9 est monté pivotant à son bord amont, autour d'un axe transversal 94, entre :
- une position rabattue de jet direct illustrée à la figure 1, dans laquelle le volet de blocage 9 s'insère dans une portion ou virole amont 72 du capot intérieur 7, la face côté veine 91 du volet s'étendant alors dans le prolongement aérodynamique de la face interne 71 d'une portion aval 73 du capot intérieur 7,
- et une position déployée de jet inverse illustrée à la figure 2, dans laquelle le volet de blocage 9 s'étend à l'intérieur de la veine 3, la veine étant alors au moins partiellement fermée en aval des grilles de déviation 4 par l'ensemble des volets de blocage en position de jet inverse.

La virole amont 72 du capot intérieur est pourvue de cavités 10 pour la réception des volets de blocage en position de jet direct. Chaque cavité 10 présente une section (forme et dimensions) sensiblement identique (à un jeu près) à celle du volet qu'elle reçoit en position de jet direct.

La portion aval 73 du capot intérieur est constitué par, ou recouvert par, des panneaux acoustiques 11 aptes à absorber les ondes sonores émises par le moteur.

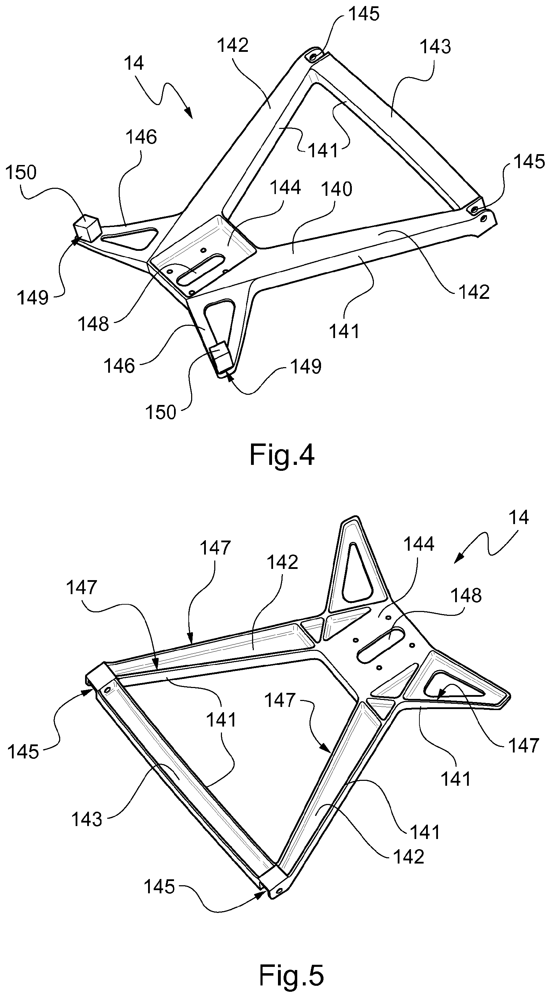

Chaque volet de blocage 9 est pivoté autour de son axe 94 par le biais d'une bielle de commande 12 dont une première extrémité est articulée sur un élément (fixe) de la structure interne fixe 1 de la nacelle. La seconde extrémité de la bielle de commande 12 traverse une lumière de passage 148 (voir fig. 4 et 5) ménagée dans le volet de blocage et est articulée sur une attache de bielle 14 à ressort à lame, fixée sur la face arrière 92 du volet de blocage.

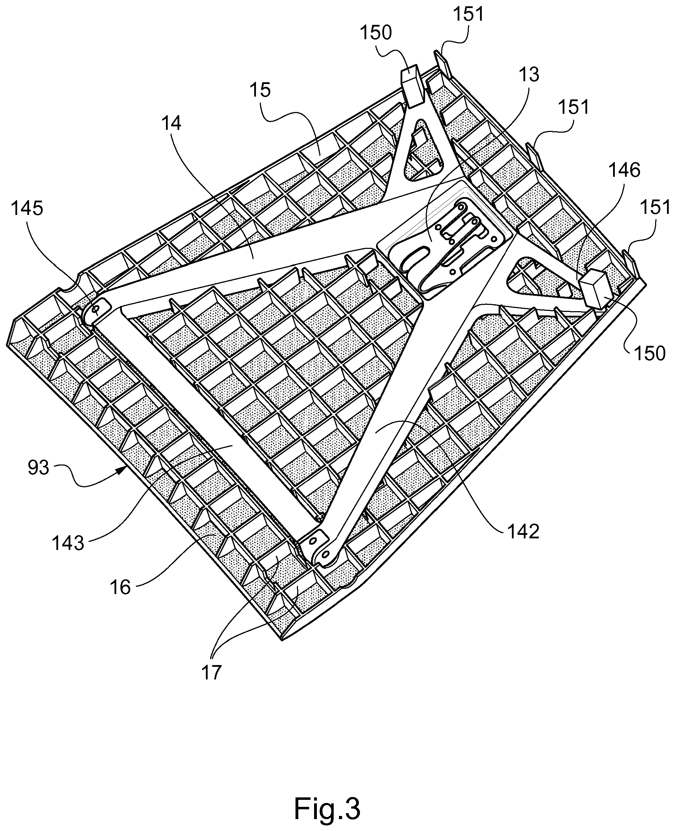

Chaque volet de blocage (voir Fig. 3 à 7) comprend un cadre structural 14, une peau résistive 16 qui forme la face côté veine 91 du volet de blocage, et une âme alvéolaire 17 présentant des cloisons s'étendant sensiblement radialement.

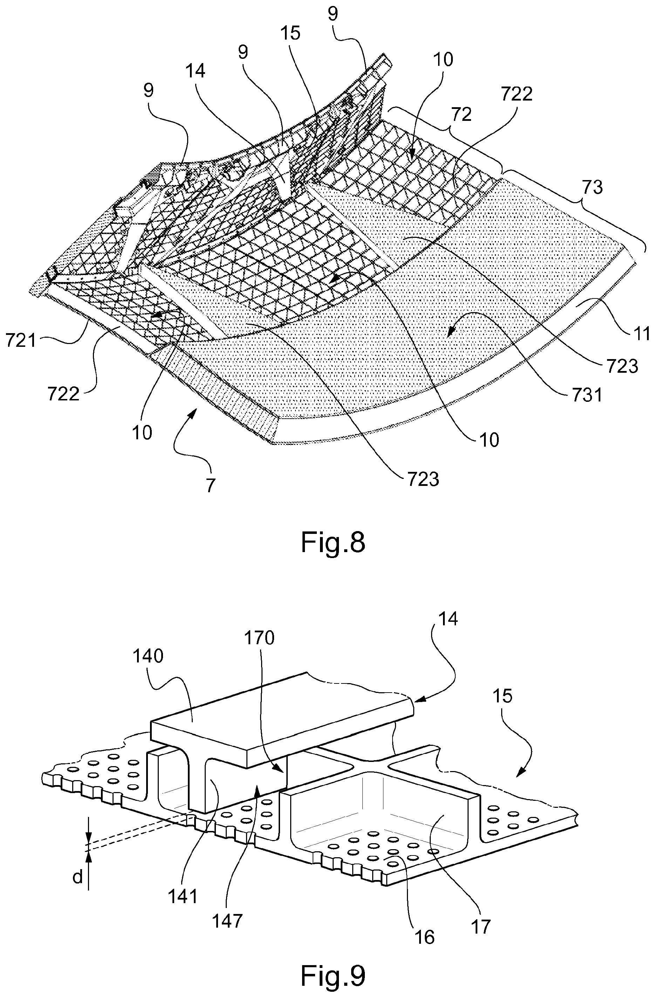

Selon l'invention, le cadre structural 14 et la peau résistive 16 sont distants en tout point d'au moins 1 mm selon la direction radiale, de préférence au moins 2 mm, voire plus de 5 mm, cette distance créant un découplage entre la peau résistive 16 et le cadre structural 14 qui rend ledit cadre pas ou peu sensible à l'impact. Cette distance, qualifiée de distance de découplage, peut être observée à la figure 9 où elle est référencée « d ».

Le cadre structural 14 est représenté seul sur les figures 4 et 5, la figure 4 montrant sa face arrière, la figure 5 montrant sa face côté veine. Il peut comprendre une portion de corps 140 s'étendant parallèlement à la peau résistive 16 et des ailettes 141 s'étendant radialement à partir de la portion de corps 140 du côté de la face côté veine de celle-ci, par exemple le long de divers bords de ladite portion de corps 140. Ladite portion de corps 140 du cadre structural ne s'étend pas sur la totalité de la surface du volet de blocage ; en d'autres termes cette portion de corps 140 présente des dimensions et une surface restreintes comparées à celles de la peau résistive 16. Plus précisément, le cadre structural ou sa portion de corps 140 couvre moins de 50% de la surface de la peau résistive.

Dans l'exemple non limitatif illustré, la portion de corps 140 comprend une première partie globalement trapézoïdale comprenant deux nervures longitudinales 142, une nervure transversale amont 143 qui forme la grande base de la partie trapézoïdale et une plaque aval 144 qui forme la petite base de la partie trapézoïdale.

La nervure transversale amont 143 longe le bord transversal amont 93 (voir aussi fig. 1 et 2) du volet de blocage. Cette nervure transversale amont 143 est optionnelle.

A noter que le cadre structural peut comprendre aussi une nervure transversale aval (non représentée), à l'opposé des nervures longitudinales 142 par rapport à la plaque aval 144, cette éventuelle nervure transversale aval longeant un bord aval du volet de blocage.

Les nervures longitudinales 142 comportent, à leur extrémité amont, des chapes 145, qui peuvent être simples ou doubles. Ces chapes 145 reçoivent deux pivots alignés (non représentés) portés par le capot intérieur 7 de l'inverseur de poussée pour former l'axe de pivotement 94 (voir fig. 2) du volet de blocage.

Les nervures longitudinales 142 et transversale amont 143 présentent une face arrière qui s'étend dans un même « plan » (qui n'est pas forcément plan au sens géométrique du terme et peut au contraire être bombé) parallèle à la peau résistive 16. La plaque aval 144 forme un logement en retrait (vers l'intérieur du volet) par rapport au plan de la face arrière des nervures 142 et 143. Ce logement reçoit l'attache de bielle 13 du volet de blocage. Il présente une lumière de passage 148 pour le passage de l'extrémité de la bielle de commande 12 qui est reliée à l'attache de bielle 13.

La portion de corps 140 du cadre structural comprend de plus deux oreilles 146 de part et d'autre transversalement de la plaque aval 144. L'extrémité 149 de chaque oreille 146 porte une butée de volet 150 qui vient buter contre le fond de la cavité 10 du capot intérieur 7 dans laquelle est rabattu le volet de blocage en position de jet direct.

En variante ou éventuellement en combinaison, des butées de volet 151 sont prévues sur l'âme alvéolaire 17 comme illustré à la figure 3.

Ainsi la portion de corps 140 du cadre présente une forme globale d'étoile à quatre branches (les deux oreilles 146 et les deux nervures longitudinales142), dont les branches s'étendent jusqu'aux quatre coins du volet à partir d'une plaque aval 144 qui assure un renfort mécanique du volet autour de l'attache de bielle ; à cette étoile peut s'ajouter une nervure transversale amont 143 (optionnelle) qui vient renforcer le panneau au niveau de son axe de pivotement 94.

Comme indiqué précédemment, le cadre structural 14 comprend des ailettes 141 qui prolongent radialement la portion de corps 140 vers la peau résistive 16 du volet de blocage. Dans l'exemple illustré, ses ailettes s'étendent le long et au niveau ou à proximité des bords des nervures longitudinales 142 et transversale 143 et des oreilles 146.

Chaque ailette 141 présente, en regard de la peau résistive, un bord libre 147 qui est séparé de ladite peau résistive 16 par une distance de découplage d (voir fig. 9) de préférence supérieure à 2 mm. La distance existant entre les bords libres 147 des ailettes et la peau résistive 16 peut être la même en tout point desdits bords libres, auquel cas les bords libres des ailettes s'étendent dans un « plan » (en réalité bombé) parallèle à la peau résistive 16. En variante, la distance qui sépare les bords libres des ailettes et la peau résistive peut varier d'un point à un autre desdits bords libres (elle peut aussi différer d'une ailette à une autre) tout en restant en tout point supérieure à une distance minimale qui correspond à ladite distance de découplage.

La plaque aval 144 de la portion de corps peut être située dans le plan des bords libres 147 des ailettes 141 (comme dans l'exemple illustré) ou en variante dans un plan intermédiaire entre le plan des bords libres 147 et celui de la face arrière des nervures 142 et 143.

La peau résistive 16 peut être formée par une cloison rigide macro-perforée ou micro-perforée ou par un tissu renforcé ou treillis offrant la perméabilité acoustique requise.

L'âme alvéolaire 17 comprend des cloisons rigides s'étendant radialement vers l'extérieur (c'est-à-dire selon une direction radiale centrifuge) depuis la peau résistive 16. L'organisation géométrique des cloisons, les dimensions et la forme des alvéoles que ces cloisons délimitent sont déterminées par les besoins acoustiques.

De préférence, la peau résistive 16 et l'âme alvéolaire 17 sont fixées l'une à l'autre ou constituées d'une seule pièce, qui peut être obtenue par moulage ou par impression 3D par exemple, de façon à former un sous-ensemble 15 monobloc, de préférence autoportant et rigide, qualifié de caisson aéro-acoustique.

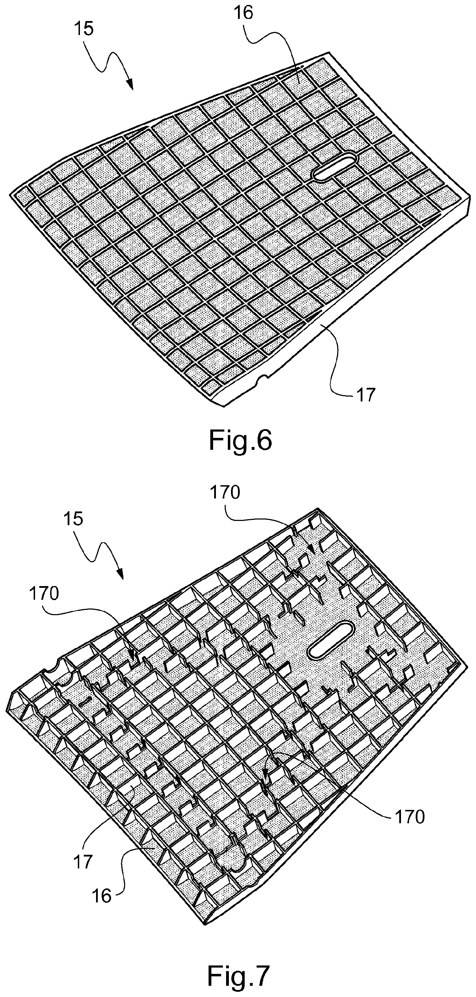

Comme on peut l'observer sur les figures 7 et 9, les cloisons de l'âme alvéolaire présentent des encoches 170 qui permettent d'emboîter le cadre structural 14 dans l'âme alvéolaire 17 (la forme du cadre structural apparaît ainsi comme une empreinte dans l'âme alvéolaire sur la figure 7). Ces encoches reçoivent les ailettes 141 du cadre structural.

Le fond des encoches 170 est situé à une distance de la peau résistive 16 correspondant à la distance de découplage. Ainsi lorsque le cadre structural 14 est enfoncé au maximum dans l'âme alvéolaire 17, la distance séparant la peau résistive 16 du bord libre 147 des ailettes 141 (qui est en appui sur le fond des encoches 170) est égale à la distance de découplage.

Si les bords libres des ailettes ne sont pas situés dans un même plan parallèle à la peau résistive, bien entendu les encoches 170 peuvent être de profondeur variable de façon à ce que la face arrière de la portion de corps 140 du cadre soit parallèle à la peau résistive, la distance existant entre le fond des encoches 170 et la peau résistive restant au moins égale à la distance de découplage en tout point des encoches.

Comme on peut le constater, le volet de blocage 9 selon l'invention comprend un nombre limité de pièces, ce qui permet de réduire ses coûts de fabrication et sa masse. Le procédé de fabrication d'un tel volet de blocage est extrêmement simple. Le caisson aéro-acoustique 15 peut par exemple être obtenu par une seule opération de moulage ou d'impression 3D. Parallèlement, la fabrication du cadre structural 14, qui peut être métallique ou en matériau composite, ne pose pas non plus de difficultés. L'attache de bielle 13 est fixée au cadre structural 14 par tout moyen approprié. Les deux sous-ensembles ainsi obtenus sont ensuite emboîtés et solidarisés l'un à l'autre par tout moyen approprié, par exemple par collage.

Par ailleurs, le volet de blocage 9 présente un rapport masse/tenue mécanique optimisé. La tenue mécanique du volet étant assurée par le cadre structural 14 seul, l'âme alvéolaire 17 peut présenter une masse réduite, avec des cloisons plus fines, ce qui permet aussi d'augmenter le taux de surface ouverte de la peau résistive 16 et d'améliorer les performances d'absorption acoustique du volet.

Aussi et surtout, grâce à la distance de découplage d entre sa peau résistive 16 et son cadre structural 14, le volet de blocage 9 selon l'invention est plus tolérant à l'impact que les volets antérieurs connus.

La figure 7 montre un secteur angulaire de l'inverseur de poussée comprenant trois volets de blocage 9 semblables au volet précédemment décrit, lesquels volets de blocage 9 sont représentés en position de jet inverse et sans leur bielle de commande. On retrouve le capot intérieur 7 du capotage coulissant de l'inverseur de poussée, et en particulier un secteur angulaire de sa portion aval 73 en panneau acoustique 11, ainsi qu'un secteur angulaire de sa virole amont 72 pourvu de cavités 10 (ici au nombre de trois) pour la réception des volets de blocage 9.

La virole amont 72 comprend une peau arrière 721 et un caillebotis 722. Le caillebotis 722 forme le fond des cavités 10. Le caillebotis présente des alvéoles qui s'étendent radialement dans le prolongement des alvéoles de l'âme alvéolaire 17 des volets de blocage lorsque ceux-ci sont en position rabattue de jet direct (une alvéole du volet de blocage correspondant de préférence à une alvéole du caillebotis et vice versa).

Un septum macro-perforé ou micro-perforé (non représenté) peut être intercalé entre le caillebotis et l'âme alvéolaire du volet en position de jet direct pour former un panneau acoustique à deux étages d'atténuation pouvant atténuer efficacement deux bandes de fréquences sonores distinctes notamment si la hauteur (dimension selon la direction radiale) des alvéoles de l'âme alvéolaire du volet est différente de la hauteur des alvéoles du caillebotis. Ce septum macro-perforé ou micro-perforé peut être constitué par une peau arrière fixée à l'âme alvéolaire du volet ou par une peau avant fixée au caillebotis auquel cas le volet de blocage est dépourvu de peau arrière.

Il est à noter que, dans ce deuxième cas, les volets de blocage en position de jet inverse ne sont pas étanches et qu'une (très faible) partie du flux d'air passe à travers les volets de blocage (par les perforations de la peau résistive) ; cette perte de charge au niveau des volets de blocage est suffisamment faible pour être compensée par un dimensionnement adéquat des systèmes de freinage (de la même façon que sont aussi compensées les fuites qui peuvent exister entre les volets de blocage). Le gain de masse obtenu par la suppression de la peau arrière et la provision d'un cadre structural de dimensions réduites, ainsi que l'obtention d'un volet de blocage moins sensible aux chocs grâce à la combinaison des dimensions réduites du cadre structural et de la distance de découplage, restent prépondérants par rapport à l'inconvénient que constitue la perte de charge en jet inverse.

Des panneaux acoustiques inter-volets 723 sont fixés sur le caillebotis 722 entre les cavités 10. La forme et les dimensions de ces panneaux inter-volets sont telles qu'ils comblent tout l'espace disponible entre les volets et que la face avant perforée ou micro-perforée desdits panneaux inter-volets 723 affleure au niveau de la face côté veine 91 des volets en position de jet direct, qui elle-même affleure au niveau de la face avant 731 des panneaux acoustique 11 (ou face interne 71 du capot intérieur 7) de sorte que toutes les faces susmentionnées sont dans le prolongement aérodynamique les unes des autres pour limiter la trainée générée dans la veine 3. Dès lors, les panneaux inter-volets 723 sont d'épaisseur moindre par rapport aux panneaux acoustiques 11 de la portion aval 73 du capot intérieur.

Grâce au caillebotis 722, aux panneaux inter-volets 723, à l'âme alvéolaire 17 des volets de blocage et aux panneaux acoustique 11, l'intégralité du capot intérieur 7 est traitée acoustiquement.

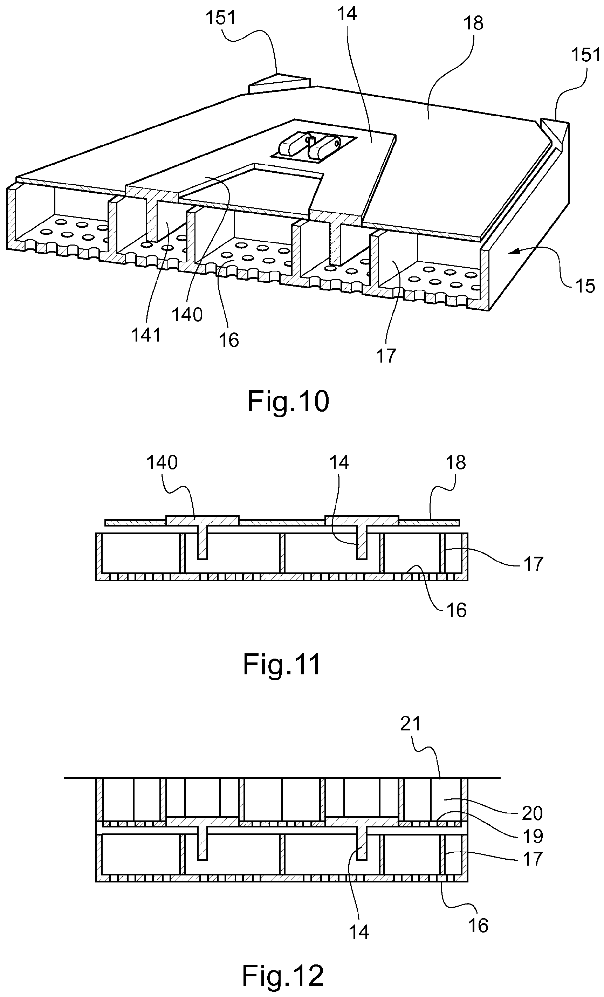

La figure 10 montre un deuxième mode de réalisation d'un volet de blocage selon l'invention. Ce mode de réalisation diffère du premier mode de réalisation des figures 3 à 7 en ce qu'il comprend une peau arrière 18 recouvrant la plus grande partie ou la totalité des zones alvéolaires du caisson aéro-acoustique 15.

Par soucis de simplicité, bien que le cadre structural de ce deuxième mode de réalisation n'ait pas exactement la même forme (étoilée) que le cadre structural du premier mode de réalisation, il est repéré avec la même référence 14. De même, la référence 15 désigne le caisson aéro-acoustique de ce deuxième mode de réalisation même si ce caisson présente des cloisons qui ne suivent pas exactement la même répartition ou présentent des encoches différentes du caisson du premier mode de réalisation.

La peau arrière 18 s'étend de préférence parallèlement à la peau résistive 16, ici dans le prolongement de la face interne de la portion de corps 140 du cadre structural 14 du volet. Dans l'exemple illustré, la peau arrière 18 est fixée au cadre structural 14, par exemple par collage ou tout autre moyen approprié. Elle pourrait, en variante, être fixée au caisson aéro-acoustique 15 ou faire partie intégrante dudit caisson, en étant fabriquée en même temps que celui-ci par fabrication additive par exemple.

La figure 10 montre également des butées de volet 151 formées dans le caisson aéro-acoustique 15, à titre de variante des butées 150 qui sont fixées au cadre structural dans le premier mode de réalisation (fig. 3 et 4).

Dans une configuration SDOF illustrée à la figure 11, la peau arrière 18 peut être pleine. Elle offre alors un parement étanche permettant de mieux retenir la pression d'air lorsque le volet est en position de jet inverse.

Associée au caillebotis 722, toujours dans le cas d'un volet du type SDOF, la peau arrière est de préférence micro-perforée pour fournir un septum acoustique entre les alvéoles du volet de blocage et les alvéoles du caillebottis lorsque le volet en position de jet direct.

La figure 12 illustre un troisième mode de réalisation correspondant à une configuration 2DOF du volet de blocage. Ce volet de blocage comprend :
- un premier étage d'atténuation acoustique comportant
   ∘ un premier caisson aéro-acoustique avec une peau résistive 16 micro-perforée (côté veine) prolongée radialement par des cloisons formant une première âme alvéolaire 17,
   ∘ et un cadre structural 14 découplé de la peau résistive 16,
- un second étage d'atténuation acoustique comportant une seconde âme alvéolaire 20,
- une paroi intermédiaire 19 qui, en l'exemple, est fixée au cadre structural 14 ou à la seconde âme alvéolaire 20 et s'étend parallèlement à la peau résistive 16 ; cette paroi intermédiaire 19 est micro-perforée ou macro-perforée pour former un septum acoustique entre les deux étages d'atténuation acoustique,
- optionnellement, une peau arrière 21, qui recouvre la seconde âme alvéolaire 20.

L'invention n'est pas limitée aux modes de réalisation illustrés.

A titre d'exemple, le cadre structural peut présenter une forme différente de celles illustrées. Son architecture peut être de forme trapézoïdale, ou autrement polygonale, voire comporter des segments arqués, etc... pour répartir la charge du caisson aéro-acoustique en de multiples points du cadre structural. Le cadre structural peut aussi tangenter certains contours périphériques du caisson aéro-acoustique lui-même.

Par ailleurs, les ailettes du cadre structural peuvent être alternativement en I, en T, en L, dès lors qu'elles présentent un bord libre en tout point distant de la peau résistive afin d'améliorer la tolérance aux chocs du volet de blocage.

## Revendications

1. Volet de blocage (9) pour inverseur de poussée (200), le volet de blocage comprenant
- un cadre structural (14) configuré pour assurer la tenue mécanique du volet de blocage,
- une âme alvéolaire (17),
- une peau résistive (16) acoustiquement poreuse, destinée à être située du côté d'une veine (3) traversée par un flux d'air,
le volet de blocage étant **caractérisé en ce que** :
- le cadre structural (14) couvre moins de 50% de la surface de la peau résistive (16)
- le cadre structural (14) est maintenu à distance de la peau résistive (16), ladite distance (d) étant ci-après appelée distance de découplage.

2. Volet de blocage (9) selon la revendication 1, dans lequel la distance de découplage (d) est supérieure ou égale à 1 mm, de préférence supérieure ou égale à 2mm, voire supérieure ou égale à 5mm.

3. Volet de blocage selon l'une des revendications 1 ou 2, dans lequel la peau résistive (16) est plaquée contre l'âme alvéolaire (17) et est fixée à celle-ci, la peau résistive et l'âme alvéolaire formant un sous-ensemble monobloc (15), ci-après dit caisson aéro-acoustique.

4. Volet de blocage selon l'une des revendications 1 à 3, dans lequel l'âme alvéolaire (17) comporte des cloisons qui s'étendent en saillie de la peau résistive (16) selon une direction, dite direction radiale, correspondant à une direction de l'épaisseur du volet de blocage.

5. Volet de blocage selon la revendication 4, dans lequel :
- le cadre structural (14) comprend une portion de corps (140) s'étendant parallèlement à la peau résistive (16), et des ailettes radiales (141) s'étendant en saillie de la portion de corps selon la direction radiale,
- les cloisons de l'âme alvéolaire présentent des encoches (170) de réception des ailettes radiales (141) du cadre structural, lesquelles encoches présentent un fond situé à une distance de la peau résistive (16) qui, en tout point de l'encoche, est supérieure ou égale à la distance de découplage, le cadre structural (14) venant ainsi s'emboîter dans l'âme alvéolaire (17).

6. Volet de blocage selon la revendication 5, dans lequel le cadre structural (14) comprend :
- deux chapes (145) s'étendant en saillie selon la direction radiale de la portion de corps (140),
- un logement ménagé dans la portion de corps (140) du côté opposé à la peau résistive, ledit logement recevant une attache de bielle (13),
- une lumière (148) dans ledit logement pour le passage d'une bielle de commande (12) du volet de blocage.

7. Volet de blocage selon l'une des revendications 1 à 6, dans lequel le cadre structural (14) et/ou l'âme alvéolaire (17) comprend, du côté opposé à la peau résistive, une butée de volet en jet direct (150, 151).

8. Volet de blocage selon la revendication 6, dans lequel le cadre structural (14) présente une première partie globalement trapézoïdale comprenant :
- une plaque aval (144), dans laquelle sont ménagés le logement de réception de l'attache de bielle et la lumière de passage de la bielle (148),
- deux nervures longitudinales (142), ayant chacune une extrémité aval reliée à ladite plaque aval, et une extrémité amont située à proximité d'un bord amont (91) du volet de blocage, les deux chapes (145) étant formées aux extrémités amont desdites nervures longitudinales (142).

9. Volet de blocage selon la revendication 8, dans lequel le cadre structural (14) présente de plus deux oreilles (146) de part et d'autre de la plaque aval (144), lesdites oreilles présentant chacune une extrémité (149) opposée à la plaque aval pourvue d'une butée de volet en jet direct (150).

10. Volet de blocage selon l'une des revendications 1 à 9, **caractérisé en ce qu'**il est dépourvu de peau arrière.

11. Nacelle (100) comprenant un inverseur de poussée (200) du type à grilles et capotage coulissant, **caractérisée en ce que** l'inverseur de poussée comprend des volets de blocage (9) selon l'une des revendications 1 à 10.

## Patentansprüche

1. Sperrklappe (9) für eine Schubumkehrvorrichtung (200), die Sperrklappe umfassend
- einen Strukturrahmen (14), der so eingerichtet ist, dass er die mechanische Festigkeit der Sperrklappe gewährleistet,
- einen Wabenkern (17)
- eine akustisch poröse Widerstandshaut (16), die dazu bestimmt ist, sich auf der Seite eines Stroms (3) zu befinden, der von einem Luftfluss durchquert wird,
wobei die Sperrklappe **dadurch gekennzeichnet ist, dass**:
- der Strukturrahmen (14) weniger als 50 % der Oberfläche der Widerstandshaut (16) abdeckt
- der Strukturrahmen (14) in einem Abstand von der Widerstandshaut (16) gehalten wird, wobei der Abstand (d) im Folgenden als Entkopplungsabstand bezeichnet wird.

2. Sperrklappe (9) nach Anspruch 1, wobei der Entkopplungsabstand (d) größer oder gleich 1 mm, vorzugsweise größer oder gleich 2 mm oder sogar größer oder gleich 5 mm ist.

3. Sperrklappe nach einem der Ansprüche 1 oder 2, wobei die Widerstandshaut (16) gegen den Wabenkern (17) gedrückt und daran befestigt ist, wobei die Widerstandshaut und der Wabenkern eine einteilige Unterbaugruppe (15) bilden, nachfolgend als Schallschutzgehäuse bezeichnet.

4. Sperrklappe nach einem der Ansprüche 1 bis 3, wobei der Wabenkern (17) Wände enthält, die sich von der Widerstandshaut (16) in einer Richtung, der sogenannten radialen Richtung, die einer Richtung der Dicke der Sperrklappe entspricht, erstrecken.

5. Sperrklappe nach Anspruch 4, wobei:
- der Strukturrahmen (14) einen Körperabschnitt (140), der sich parallel zu der Widerstandshaut (16) erstreckt, und radiale Rippen (141) umfasst, die sich in radialer Richtung von dem Körperabschnitt vorstehend erstrecken,
- die Wände des Wabenkerns Aussparungen (170) zur Aufnahme der radialen Rippen (141) des Strukturrahmens aufweisen, wobei die Aussparungen einen Boden aufweisen, der sich in einem Abstand von der Widerstandshaut (16) befindet, der an jedem Punkt der Aussparung größer oder gleich dem Entkopplungsabstand ist, wobei der Strukturrahmen (14) somit in den Wabenkern (17) eingreift.

6. Sperrklappe nach Anspruch 5, wobei der Strukturrahmen (14) umfasst:
- zwei Gabelköpfe (145), die sich in radialer Richtung von dem Körperabschnitt (140) vorstehend erstrecken
- einen Sitz, der in dem Körperabschnitt (140) auf der der Widerstandshaut gegenüberliegenden Seite vorgesehen ist, wobei der Sitz eine Pleuelstangenbefestigung (13) aufnimmt
- eine Öffnung (148) in dem Sitz zum Durchführen einer Steuerstange (12) der Sperrklappe.

7. Sperrklappe nach einem der Ansprüche 1 bis 6, wobei der Strukturrahmen (14) und/oder der Wabenkern (17) auf der der Widerstandshaut gegenüberliegenden Seite einen Direktstrahl-Klappenanschlag (150, 151) umfasst.

8. Sperrklappe nach Anspruch 6, wobei der Strukturrahmen (14) einen ersten, insgesamt trapezförmigen Teil aufweist, der Folgendes umfasst:
- eine nachgelagerte Platte (144), in der der Aufnahmesitz der Pleuelstangenbefestigung und die Durchgangsöffnung der Pleuelstange (148) vorgesehen sind,
- zwei Längsrippen (142), die jeweils ein nachgelagertes Ende, das mit der nachgelagerten Platte verbunden ist, und ein vorgelagertes Ende aufweisen, das sich in der Nähe einer vorgelagerten Kante (91) der Sperrklappe befindet, wobei die beiden Gabelköpfe (145) an den vorgelagerten Enden der Längsrippen (142) ausgebildet sind.

9. Sperrklappe nach Anspruch 8, wobei der Strukturrahmen (14) außerdem zwei Laschen (146) auf jeder Seite der nachgelagerten Platte (144) aufweist, wobei die Laschen jeweils ein der nachgelagerten Platte gegenüberliegendes Ende (149) aufweisen, das mit einem Direktstrahl-Klappenanschlag (150) versehen ist.

10. Sperrklappe nach einem der Ansprüche 1 bis 9, **dadurch gekennzeichnet, dass** sie keine Rückhaut aufweist.

11. Gondel (100), die eine Schubumkehrvorrichtung (200) des Typs mit Gittern und verschiebbarer Haubenabdeckung umfasst, **dadurch gekennzeichnet, dass** die Schubumkehrvorrichtung Sperrklappen (9) nach einem der Ansprüche 1 bis 10 umfasst.

## Claims

1. Blocker door (9) for a thrust reverser (200), the blocker door comprising:
- a structural frame (14) configured to provide the mechanical strength of the blocker door,
- an alveolar core (17),
- an acoustically porous resistive skin (16) intended to be located on the same side as a flow duct (3) through which an air flow passes,
the blocker door being **characterised in that**:
- the structural frame (14) covers less than 50% of the surface of the resistive skin (16)
- the structural frame (14) is held at a distance from the resistive skin (16), said distance (d) hereinafter being referred to as the decoupling distance.

2. Blocker door (9) according to claim 1, wherein the decoupling distance (d) is greater than or equal to 1 mm, preferably greater than or equal to 2 mm, or even greater than or equal to 5 mm.

3. Blocker door according to one of claims 1 or 2, wherein the resistive skin (16) is pressed against the alveolar core (17) and is secured thereto, the resistive skin and the alveolar core forming a single-piece subassembly (15), hereinafter referred to as an aero-acoustic box.

4. Blocker door according to one of claims 1 to 3, wherein the alveolar core (17) includes partitions that extend projecting from the resistive skin (16) in a direction, referred to as the radial direction, corresponding to a direction of the thickness of the blocker door.

5. Blocker door according to claim 4, wherein:
- the structural frame (14) comprises a body portion (140) extending parallel to the resistive skin (16), and radial fins (141) extending projecting from the body portion in the radial direction,
- the partitions of the alveolar core have notches (170) for receiving the radial fins (141) of the structural frame, said notches having a bottom located at a distance from the resistive skin (16) which, at every point on the notch, is greater than or equal to the decoupling distance, the structural frame (14) thus fitting in the alveolar frame (17).

6. Blocker door according to claim 5, wherein the structural frame (14) comprises:
- two shackles (145) extending projecting in the radial direction from the body portion (140),
- a housing provided in the body portion (140) on the opposite side to the resistive skin, said housing receiving a connecting rod attachment (13),
- an aperture (148) in said housing for a connecting rod (12) controlling the blocker door to pass through.

7. Blocker door according to one of claims 1 to 6, wherein the structural frame (14) and/or the alveolar core (17) comprises, on the opposite side to the resistive skin, a direct-jet door stop (150, 151).

8. Blocker door according to claim 6, wherein the structural frame (14) has a roughly trapezoidal first part comprising:
- a downstream plate (144), in which the housing receiving the connecting rod attachment and the aperture (148) for the connecting rod (12) controlling the blocker door to pass through are provided,
- two longitudinal ribs (142), each having a downstream end connected to said downstream plate and an upstream end located in proximity to an upstream edge (91) of the blocker door, the two shackles (145) being formed at the upstream ends of said longitudinal ribs (142).

9. Blocker door according to claim 8, wherein the structural frame (14) also has two tabs (146) on either side of the downstream plate (144), said tabs each having an end (149) opposite to the downstream plate provided with a door stop (150) in direct-jet mode.

10. Blocker door according to one of claims 1 to 9, **characterised in that** it has no rear skin.

11. Nacelle (100) comprising a thrust reverser (200) of the type with screens and sliding cover, **characterised in that** the thrust reverser comprises blocker doors (9) according to one of claims 1 to 10.
